# EUROPÄISCHE PATENTSCHRIFT

(11) **EP 0 845 375 B1**
(45) Veröffentlichungstag und Bekanntmachung des Hinweises auf die Patenterteilung: **12.04.2006**
(21) Anmeldenummer: 97110239.7
(22) Anmeldetag: 23.06.1997
(51) Int. Cl.: B60H 1/00

(54) **Heiz- oder Klimaanlage für ein Fahrzeug**
Heating or air conditioning device for a vehicle
Dispositif de chauffage ou de climatisation d'un véhicule

(30) Priorität: 29.11.1996 DE 19649512
(43) Veröffentlichungstag der Anmeldung: 03.06.1998
(73) Patentinhaber: Behr GmbH & Co. KG, 70469 Stuttgart (DE)
(72) Erfinder: Raimann, Joachim, 70469 Stuttgart (DE)

(56) Entgegenhaltungen:
- DE-A- 4 000 990
- DE-A- 4 119 474
- DE-A- 19 515 836
- FR-A- 2 562 845

## Beschreibung

Die Erfindung betrifft eine Heiz- oder Klimaanlage für ein Fahrzeug nach dem Oberbegriff des Patentanspruchs 1.

Aus der DE 40 22 932 A1 ist eine Heiz- oder Klimaanlage mit einem Gehäuse bekannt, das einen innerhalb eines Warmluftkanals angeordneten Heizkörper aufweist, wobei in den Warmluftkanal ein Warmluftstrom geführt wird von einer Einlaßöffnung in Richtung einer oder mehrerer Auslaßöffnungen des Gehäuses. Endseitig ist der Warmluftkanal mit einem Kanalfortsatz verbunden, der einen Teil des Warmluftstroms zu einer Defroster-Auslaßöffnung führt. Auf diese Weise ist gewährleistet, daß eine ausreichend warme Luftmenge einer Defroster-Auslaßdüse zugeführt werden kann zur Vermeidung einer beschlagenen Windschutzscheibe. Nachteilig an der bekannten Heiz- oder Klimaanlage ist, daß in Folge einer geschlossenen Defroster-Auslaßöffnung der durch den Kanalfortsatz geführte Warmluftstrom unter nicht ausreichender Vermischung mit einem am Heizkörper vorbeigeführten Kaltluftstrom durch weitere Auslaßöffnungen in den Fahrzeuginnenraum gelangen kann.

Auch bei der aus der **DE 195 01 593 A1** bekannten Heizanlage wird ein durch den Heizkörper erwärmter Teilluftstrom direkt zu einer Defroster-Auslaßöffnung geleitet. Zu diesem Zweck weist die Mischklappe speziell ausgebildete Seitenflügel auf bzw. ist im Gehäuse mindestens ein Seitenkanal vorgesehen. Auch diese bekannte Anlage weist keine Mittel auf, daß bei geschlossener Defrosterklappe das Weiterströmen von Warmluft durch den Seitenkanal in Richtung anderer Auslaßöffnungen verhindert wird.

DE-A-4 119 474 zeigt eien Klimaanlage gemäß Oberbegriff des Anspr. 1.

Es ist daher Aufgabe der Erfindung, eine Heiz- oder Klimaanlage derart auszubilden, daß bei Vorhandensein eines sich an einen Luftkanal anschließenden Kanalfortsatzes nur dann Luft durch diesen Kanalfortsatz strömen kann, wenn die entsprechenede Auslaßöffnung der Heiz- oder Klimaanlage geöffnet ist.

Zur Lösung dieser Aufgabe weist die Erfindung die Merkmale des Patentanspruchs 1 auf.

Nach der Erfindung ist ein Kanalfortsatz vorgesehen, der sich von einem Endbereich eines Warm- oder Kaltluftkanals bis unmittelbar zu einem einer Auslaßöffnung zugeordneten Luftsteuerelement erstreckt. In der die Auslaßöffnung schließenden Stellung des Luftsteuerelements kommt dieses an einem randseitigen Ende des Kanalfortsatzes zur Anlage, wobei der Auslaß des Kanalfortsatzes vollflächig verschlossen ist. Dem Luftsteuerelement kommt somit eine Doppelfunktion zu. Zum einen dient es zum Verschließen des Querschnitts der gesamten Auslaßöffnung und zum anderen zum Verschließen des Auslasses des Kanalfortsatzes. Auf diese Weise wird wirksam der durch den Kanalfortsatz geführte Luftstrom zurückgehalten. Somit wird gewährleistet, daß der gesamte zugeführte Warm- und Kaltluftstrom in dem dafür vorgesehenen Mischraum miteinander vermischt und als homogener Luftstrom den anderen Auslaßöffnungen zugeführt werden kann.

Erfindungsgemäß ist der Kanalfortsatz zwischen dem Endbereich eines Warmluftkanals und einem Defroster-Luftsteuerelement angeordnet. Hierdurch kann der Defroster-Auslaßöffnung direkt warme Luft zugeführt werden, um eine ausreichend hohe Temperatur des Auslaßluftstroms zu erzielen.

Nach einer Weiterbildung der Erfindung weist die Heizungs- oder Klimaanlage zwei Kanalfortsätze auf, die sich randseitig in der Nähe jeweils einer Gehäusewandung erstrecken, sodaß der Warmluftstrom durch diese Kanalfortsätze dem äußeren Bereich der Defroster-Auslaßöffnung zugeordnet ist. Dieser äußere Bereich der Defroster-Auslaßöffnung ist wiederum dem äußeren Bereich der Defroster-Auslaßdüse zugeordnet. Der in dem Mischraum vermischte Luftstrom ist einem mittleren Bereich der Defroster-Auslaßöffnung zugeordnet, sodaß der gemischte Luftstrom einen kürzeren Weg zu der Defroster-Auslaßdüse hat und infolgedessen weniger stark abgekühlt wird. Durch diese randseitige Anordnung des Auslasses des Kanalfortsatzes wird eine gleichmäßige Temperaturverteilung an der Defroster-Auslaßdüse erzielt.

Nach einer Ausgestaltung der Erfindung ist der Einlaß des Kanalfortsatzes rechteckförmig ausgebildet. Im weiteren Verlauf des Kanalfortsatzes verbreitert sich der Kanalfortsatz, so daß er endseitig einen schlitzförmigen Auslaß bildet, der sich über die gesamte Breite der Auslaßöffnung erstreckt.

Weitere Vorteile der Erfindung ergeben sich aus den weiteren Unteransprüchen.

Ein Ausführungsbeispiel der Erfindung wird nachfolgend anhand der Zeichnungen näher erläutert.

Es zeigen:
- **Fig. 1**: einen Teilschnitt durch ein Gehäuse einer Klimaanlage,
- **Fig. 2**: eine Schnittdarstellung entlang der Linie I-I gemäß der Fig. 1 und
- **Fig. 3**: eine perspektivische Darstellung eines Kanalfortsatzes.

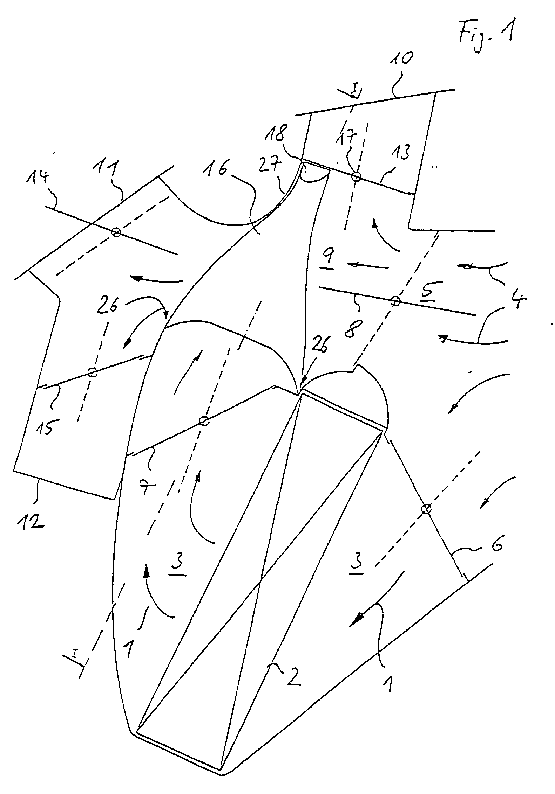

Fig. 1 zeigt einen Teilschnitt einer Klimaanlage, die einen mittels eines nicht dargestellten Gebläses angesaugten Luftstrom durch einen ebenfalls nicht dargestellten Verdampfer leitet zur Abkühlung des Luftstroms auf eine vorgegebene Temperatur. Nach Durchströmen des Verdampfers wird der Luftstrom aufgeteilt in einen Warmluftstrom 1, der durch einen einen Heizkörper 2 aufweisenden Warmluftkanal 3 geführt wird, und in einen Kaltluftstrom 4, der in einem Kaltluftkanal 5 an dem Heizkörper 2 vorbeigeleitet wird. Als Luftsteuerelemente sind dem Warmluftkanal 3 eine strömungsaufwärts vom Heizkörper 2 angeordnete Klappe 6 und eine stromabwärts des Heizkörpers 2 angeordnete Klappe 7 einerseits und dem Kaltluftkanal 5 eine Klappe 8 andererseits zugeordnet. Durch Einstellung dieser Klappen 6, 7 und 8 läßt sich der Luftdurchsatz durch die entsprechenden Kanäle 3 und 5 einstellen, sodaß sich eine gewünschte Temperatur des Luftstroms durch Vermischung des Warmluftstroms 1 und des Kaltluftstroms 4 in einem Mischraum 9 ergibt.

Aufgrund der Anordnung und Ausbildung von Auslaßöffnungen, nämlich einer oberen Defroster-Auslaßöffnung 10, einer mittleren Auslaßöffnung 11 sowie einer Fußraum-Auslaßöffnung 12 stellt sich eine Temperaturschichtung ein, die bewirkt, daß beispielsweise dem Fußraum wärmere Luft zugeführt wird als einer mit der mittleren Auslaßöffnung 11 in Verbindung stehenden mittleren Austrittsdüse.

Zur Steuerung des Luftdurchsatzes zu den einzelnen Austrittsdüsen ist der Defroster-Auslaßöffnung 10 eine Defroster-Klappe 13, der mittleren Auslaßöffnung 11 eine Belüftungsklappe 14 sowie der Fußraum-Auslaßöffnung 12 eine Fußraumklappe 15 zugeordnet.

In einem seitlichen Randbereich des Mischraums 9 erstreckt sich vom Endbereich des Warmluftkanals 3 ein Kanalfortsatz 16 bis hin zu einer gedachten Linie, die durch die Drehachse 17 der Defrosterklappe 13 verläuft und im wesentlichen senkrecht zu der Luftströmungsrichtung durch die Defroster-Auslaßöffnung 10 angeordnet ist. Der Kanalfortsatz 16 ermöglicht, daß neben einem in dem Mischraum 9 aus Warmluft und Kaltluft vermischter erster Luftstrom ein zweiter Teilstrom, bestehend ausschließlich aus Warmluft, zugeführt wird. Gleichzeitig mit dem Öffnen der Defrosterklappe 13 wird auch ein Auslaß 18 des Kanalfortsatzes 16 geöffnet, sodaß ein Warmluftstrom zu den in Verbindung mit der Defroster-Auslaßöffnung 10 angeordneten Defroster-Auslaßdüsen geleitet wird. In der Schließstellung der Defrosterklappe 13 ist zum einen die Defroster-Auslaßöffnung 10 und zum anderen der Auslaß 18 des Kanalfortsatzes 16 verschlossen. Es kann somit keine Warmluft aus dem Auslaß 18 des Kanalfortsatzes 16 entweichen, sodaß ein unkontrolliertes Zurückströmen in den Mischraum 9 bzw. unter Umgehung desselben in Richtung der Auslaßöffnungen 11, 12 vermieden wird.

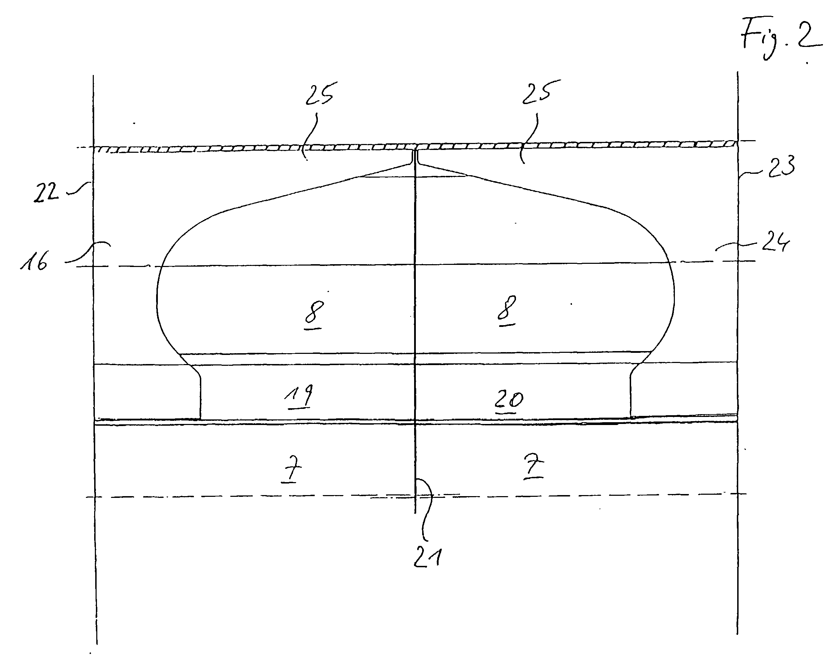

Wie aus Fig. 2 ersichtlich ist, besteht das Klimagehäuse aus zwei Gehäuseteilen 19 und 20, die durch eine Trennwand 21 getrennt sind. Entlang einer seitlichen Innenwand 22 und 23 der Gehäuseteile 19 bzw. 20 erstreckt sich je ein Kanalfortsatz 16 und 24, wobei sich sein im Eingangsbereich rechteckförmiger Öffnungsquerschnitt in einen düsenförmigen Öffnungsquerschnitt im Auslaßbereich verändert. Im Auslaßbereich ist der Kanalfortsatz 16, 24 als düsenförmiges Endstück 25 ausgebildet, das sich über die gesamte Breite des Gehäuses erstreckt. Der Öffnungsquerschnitt des Auslasses 18 entspricht etwa einem Viertel des Öffnungsquerschnitts der Defroster-Auslaßöffnung 10. Der Kanalfortsatz 16, 24 erstreckt sich in Richtung der Defroster-Auslaßöffnung 10 etwa konkavförmig, sodaß ein ausreichend großes Volumen für den Mischraum 9 zur Verfügung steht.

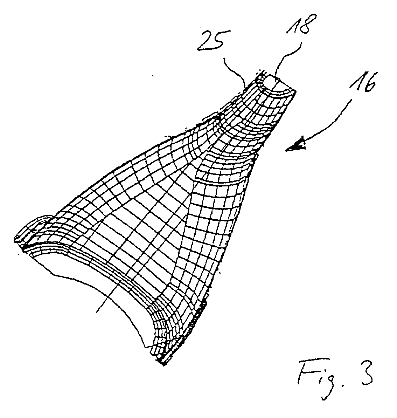

Wie besonders gut aus Fig. 3 zu ersehen ist, weist der Kanalfortsatz 16, 24 eine gleichmäßige Oberflächenkontur auf. Die schlauchförmige zusammenlaufende Kontur des Kanalfortsatzes 16, 24 verhindert eine Berührung mit der Klappe 8 in der geöffneten Stellung derselben, sodaß der Bauraumbedarf für die Klimaanlage nicht vergrößert wird. Vorzugsweise wird der Kanalfortsatz 16, 24 durch die Anlage an Anlageflächen 26 bzw. einer Innenwandung 27 des Gehäuses gehalten, ohne daß zusätzlich Befestigungsmittel vorgesehen sind. Nach Herstellung einer Gehäusehälfte kann der Kanalfortsatz 16, 24 in die dafür vorgesehene Position gebracht werden. Durch anschließendes Aufsetzen und Fixieren der zweiten Gehäusehälfte auf die erste ist der Kanalfortsatz 16, 24 ortsfest gehalten.

Die Erfindung ist nicht auf die Ausbildung des Kanalfortsatzes 16, 24 als Warmluftkanal beschränkt. Sie umfaßt weiterhin beispielsweise die Ausbildung des Kanalfortsatzes als Kaltluftkanal, der sich von dem Auslaßbereich des Kaltluftkanals 5 bis hin zu der mittleren Auslaßöffnung 11 erstreckt. Auf diese Weise kann der mittleren Auslaßöffnung 11 ein Kaltluftstrom in konzentrierter Form zur Verfügung gestellt werden.

## Patentansprüche

1. Heiz- oder Klimaanlage für ein Fahrzeug, bestehend aus einem Gehäuse mit einer Einlaßöffnung, durch den Frisch- und/oder Umluft als Zuluft zuführbar ist, mit einem Warmluftkanal, in dem ein Heizkörper angeordnet ist, mit einem Kaltluftkanal, mit einem Mischraum, in dem der durch den Warmluftkanal geleitete Warmluftstrom und der durch den Kaltluftkanal geleitete Kaltluftstrom vermischt werden, mit mehreren Auslaßöffnungen, durch die der vermischte Luftstrom zu den entsprechenden Auslassdüsen geleitet wird, mit Luftsteuerelementen zur Steuerung des Luftdurchsatzes innerhalb des Warmluftkanals, des Kaltluftkanals und der Auslaßöffnungen und mit einem zusätzlichen Kanal für die Führung eines Teilluftstroms zu einer Auslassöffnung, **dadurch gekennzeichnet,**
**daß** der zusätzliche Kanal derart ausgebildet ist, daß dieser durch eine der Defroster-Auslaßöffnung 10 zugeordnete Defrosterklappe 13 verschließbar ist; wobei der zusätzliche Kanal als Kanalfortsatz (16, 24) ausgebildet ist, der sich von einem Auslaßbereich des Warmluftkanals (3) unmittelbar in den Bereich einer Defrosterklappe (13) erstreckt und der Kanalfortsatz (16, 24) bündig mit einer gedachten Linie endet, die der Lage der Defrosterklappe (13) in ihrer Schließstellung entspricht.

2. Anlage nach einem oder mehreren der Ansprüche 1, **dadurch gekennzeichnet, daß** sich der Kanalfortsatz (16, 24) entlang eines seitlichen Randbereichs eines Gehäuseteils (19, 20) erstreckt.

3. Anlage nach einem oder mehreren der Ansprüche 1 bis 2, **dadurch gekennzeichnet, daß** sich der Kanalfortsatz (16, 24) in axialer Richtung der Defrosterklappe (13) konkavförmig in Richtung der Defroster-Auslaßöffnung (10) erstreckt.

4. Anlage nach einem oder mehreren der Ansprüche 1 bis 3, **dadurch gekennzeichnet, daß** der Kanalfortsatz (16, 24) einen schlitzförmigen Auslaß (18) aufweist, der sich parallel zur Drehachse (17) der Defrosterklappe (13) von einer Seitenwand (22, 23) zu einer gegenüberliegenden Seitenwand (Trennwand 21) eines Gehäuseteils (19, 20) erstreckt.

5. Anlage nach einem oder mehreren der Ansprüche 1 bis 4, **dadurch gekennzeichnet, daß** der Öffnungsquerschnitt des schlitzförmigen Auslasses (18) kleiner als ein Drittel des Öffnungsquerschnitts der Defroster-Auslaßöffnung (19) ist.

6. Anlage nach einem oder mehreren der Ansprüche 1 bis 5, **dadurch gekennzeichnet, daß** der Kanalfortsatz (16, 24) als Einsetzstück ausgebildet ist, das in dafür vorgesehenen Aufnahmeflächen der Gehäuseteile (19, 20) ortsfest gehalten ist.

## Claims

1. Heating or air conditioning system for a vehicle, comprising a housing with an inlet port through which fresh and/or recirculated air can be supplied as inlet air, with a warm air passage wherein a heater is located, with a cold air passage, with a blend chamber wherein the warm air flow through the warm air passage is blended with the cold air flow through the cold air passage, with a plurality of outlet ports through which the blended air flow is directed to suitable outlets, with air control elements for controlling the air flow rate within the warm air passage, the cold air passage and the outlets, and with an additional passage for directing a partial air flow to an outlet, **characterised in that** the additional passage is designed to be closed by a defroster door (13) assigned to the defroster outlet (10), wherein the additional passage is designed as a passage extension (16, 24) running from an outlet area of the warm air passage (3) immediately to the area of a defroster door (13) and wherein the passage extension (16, 24) terminates flush with an imaginary line corresponding to the orientation of the defroster door (13) in its closed position.

2. System according to claim 1, **characterised in that** the passage extension (16, 24) runs along a lateral edge area of a housing part (19, 20).

3. System according to one or more of claims 1 to 2, **characterised in that** the passage extension (16, 24) runs in a concave formation in the axial direction of the defroster door (13) towards the defroster outlet (10).

4. System according to one or more of claims 1 to 3, **characterised in that** the passage extension (16, 24) has a slot-like outlet (18) extending parallel to the axis of rotation (17) of the defroster door (13) from a side wall (22, 23) to an opposite side wall (partition 21) of a housing part (19, 20).

5. System according to one or more of claims 1 to 4, **characterised in that** the opening cross-section of the slot-like outlet (18) is less than a third of the opening cross-section of the defroster outlet (19).

6. System according to one or more of claims 1 to 5, **characterised in that** the passage extension (16, 24) is designed as an insert retained stationary in location surfaces of the housing parts (19, 20) provided for this purpose.

## Revendications

1. Installation de chauffage ou de climatisation pour un véhicule, comprenant un boîtier avec une ouverture d'entrée, par laquelle de l'air frais et/ou de l'air recyclé peut être amené comme air d'arrivée, un canal d'air chaud, dans lequel est disposé un corps de chauffage, un canal d'air froid, un espace de mélange, dans lequel le flux d'air chaud guidé par le canal d'air chaud et le flux d'air froid guidé par le canal d'air froid sont mélangés, plusieurs ouvertures de sortie, par lesquelles le flux d'air mixte est guidé vers les buses de sortie correspondantes, des éléments de commande d'air pour la commande du débit d'air à l'intérieur du canal d'air chaud, du canal d'air froid et des ouvertures de sortie, et un canal supplémentaire pour le guidage d'un flux d'air partiel vers une ouverture de sortie, **caractérisée en ce que** le canal supplémentaire est conçu de telle sorte que celui-ci peut-être fermé par un clapet de dégivreur (13) attribué à l'ouverture de sortie de dégivreur 10, le canal supplémentaire étant conçu comme un prolongement de canal (16, 24) qui s'étend depuis une zone de sortie du canal d'air chaud (3) directement dans la zone d'un clapet de dégivreur (13) et le prolongement de canal (16, 24) se terminant au même niveau qu'une ligne imaginaire, qui correspond à la position du clapet de dégivreur (13) dans sa position de fermeture.

2. Installation selon l'une quelconque ou plusieurs de la revendication 1, **caractérisée en ce que** le prolongement de canal (16, 24) s'étend le long d'une zone périphérique latérale d'une partie de boîtier (19, 20).

3. Installation selon l'une quelconque ou plusieurs des revendications 1 à 2, **caractérisée en ce que** le prolongement de canal (16, 24) s'étend dans la direction axiale du clapet de dégivreur (13) avec une forme concave en direction de l'ouverture de sortie de dégivreur (10).

4. Installation selon l'une quelconque ou plusieurs des revendications 1 à 3, **caractérisée en ce que** le prolongement de canal (16, 24) présente une sortie (18) en forme de fente, qui s'étend parallèlement à l'axe de rotation (17) du clapet de dégivreur (13) depuis une paroi latérale (22, 23) vers une paroi latérale (cloison de séparation 21) opposée d'une partie de boîtier (19, 20).

5. Installation selon l'une quelconque ou plusieurs des revendications 1 à 4, **caractérisée en ce que** la section d'ouverture de la sortie (18) en forme de fente est inférieure à un tiers de la section d'ouverture de l'ouverture de sortie de dégivreur (19).

6. Installation selon l'une quelconque ou plusieurs des revendications 1 à 5, **caractérisée en ce que** le prolongement de canal (16, 24) est conçu comme une pièce d'insertion qui est maintenue fixe dans des surfaces de logement prévues à cet effet des parties de boîtier (19, 20).
